## Europäisches Patentamt
## European Patent Office
## Office européen des brevets

(19)

(11) Veröffentlichungsnummer: **0 045 437**
**B1**

(12) # EUROPÄISCHE PATENTSCHRIFT

(45) Veröffentlichungstag der Patentschrift:
15.02.84

(51) Int. Cl.³: **G 02 B 7/26**

(21) Anmeldenummer: **81105744.7**

(22) Anmeldetag: **21.07.81**

(54) **Ein- und Auskoppelvorrichtung zum Ein- und Auskoppeln von Lichtleistung in/aus einem optischen Wellenleiter, der aus Wellenleiterkern und -mantel besteht, und Verfahren zur Herstellung dieser Ein- und Auskoppelvorrichtung.**

(30) Priorität: **31.07.80 DE 3029135**

(43) Veröffentlichungstag der Anmeldung:
**10.02.82 Patentblatt 82/6**

(45) Bekanntmachung des Hinweises auf die Patenterteilung:
**15.02.84 Patentblatt 84/7**

(84) Benannte Vertragsstaaten:
**CH DE FR GB IT LI NL SE**

(56) Entgegenhaltungen:
**DE - A - 2 851 646**
**DE - A - 2 938 810**

(73) Patentinhaber: **SIEMENS AKTIENGESELLSCHAFT,
Berlin und München Wittelsbacherplatz 2,
D-8000 München 2 (DE)**

(72) Erfinder: **Winzer, Gerhard, Dr.-Ing.,
Günderodestrasse 16, D-8000 München 83 (DE)**

EP 0 045 437 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Ein- und Auskoppelvorrichtung zum Ein- und Auskoppeln von Lichtleistung in/aus einem optischen Wellenleiter, der aus Wellenleiterkern und -mantel besteht, und Verfahren zur Herstellung dieser Ein- und Auskoppelvorrichtung.**

Die Erfindung betrifft eine Ein- und Auskoppelvorrichtung zum Ein- und Auskoppeln von Lichtleistung in/aus einem optischen Wellenleiter, der aus Wellenleiterkern und -mantel besteht, sowie ein Verfahren zur Herstellung einer solchen Ein- und Auskoppelvorrichtung.

In faseroptischen Teilnehmernetzen sollen Signalleistungen bei den Teilnehmerstationen möglichst verlustlos ein- und ausgekoppelt werden können. Die erfindungsgemässe Ein- und Auskoppelvorrichtung zum Ein- und Auskoppeln von Lichtleistung in/aus einem optischen Wellenleiter findet bei faseroptischen Teilnehmernetzen Verwendung, die als Sternnetze ausgebildet sind.

Ein Koppelelement zum Auskoppeln eines Lichtanteils aus einem optischen Wellenleiter und Wiedereinkoppeln desselben in einen abzweigenden optischen Wellenleiter ist in der Patentanmeldung DE 28 51 646 angegeben. Dabei ist zumindest ein Wellenleiter in einem Tragkörper befestigt, wobei der Tragkörper zusammen mit dem darin befestigten Wellenleiter aus einer einzigen Kern-Mantel-Glasfaser gebildet ist, wobei der Manteldurchmesser dieser Kern-Mantel-Glasfaser mindestens 1 mm beträgt.

Eine Vorrichtung zum seitlichen Einkoppeln von Strahlung in einen optischen Wellenleiter mit einem strahlungsleitenden Kernbereich ist in der Patentanmeldung DE 2 938 810 beschrieben. Dabei ist in einer Dickkernfaser eine Spiegelschicht geneigt zur Faserachse angeordnet, wobei diese Spiegelschicht einerseits nur einen geringen Teil des Kernbereichs der Faser einnimmt und andererseits ein hohes Reflexionsvermögen aufweist.

Aufgabe der vorliegenden Erfindung ist es, für ein faseroptisches Teilnehmernetz, das als Sternnetz unter Verwendung eines Reflexmischers in der Zentrale und eines Abzweigs je Teilnehmer realisiert ist, eine Ein- und Auskoppelvorrichtung zum Ein- und Auskoppeln von Lichtleistung in/aus einem optischen Wellenleiter, der aus Wellenleiterkern und -metal besteht, anzugeben, bei dem die Signalleistungen bei den einzelnen Telnehmerstationen möglichst verlustlos ein- und ausgekoppelt werden können, wobei diese Ein- und Auskoppelvorrichtung einfach im Aufbau und einfach in der Herstellung ist.

Diese Aufgabe wird erfindungsgemäss dadurch gelöst, dass ein zwei Endflächen $A_a$, $A_e$ aufweisendes Ende des optischen Wellenleiters an einem Plättchen und an einer Halbleiter-Sendediode angeordnet ist, wobei über die Endfläche $A_e$, deren Normale parallel zur Wellenleiterachse ist, Lichtleistung $P_e$ aus der aktiven Zone der Halbleiter-Sendediode in den optischen Wellenleiter einkoppelbar ist, und wobei durch Reflexion an der mit einer metallischen oder dielektrischen Spiegelschicht versehenen Endfläche $A_a$, deren Normale mit der Wellenleiterachse einen Winkel $\beta$

einschliesst, Lichtleistung $P_a$ aus dem optischen Wellenleiter durch dessen Mantel hindurch auf eine Detektorfläche auskoppelbar ist, wobei der Winkel $\beta$ so bemessen ist, dass $\arcsin (A_n/n_o) < \beta \le 45°$ erfüllt ist, wobei $A_n$ die numerische Apertur und $n_o$ der Kernbrechungsindex des optischen Wellenleiters sind.

Vorzugsweise wird für den optischen Wellenleiter eine Dickkernfaser verwendet. Vorteilhafterweise ist der optische Wellenleiter zwischen einem Substrat und dem Plättchen angeordnet. Dieses Plättchen ist entweder eine Fotodiode mit einer Detektorfläche oder ein Superstrat, welches eine Fotodiode mit einer Detektorfläche enthält.

Vorzugsweise ist die Endfläche, deren Normale parallel zur Wellenleiterachse ist, etwa um den Faktor 10 kleiner als die zweite oben näher beschriebene Endfläche.

Eine erfindungsgemässe Ein- und Auskoppelvorrichtung wird vorzugsweise dadurch hergestellt, dass eine Führungsnut für den optischen Wellenleiter entweder im Substrat oder im Plättchen angebracht wird, dass dann der optische Wellenleiter zwischen dem Substrat und dem Plättchen eingekittet wird, dass dann ein Schrägschliff an dem Verbundteil, das aus dem optischen Wellenleiter, dem Substrat und dem Plättchen besteht, angebracht wird, dass anschliessend dieser Schrägschliff optisch poliert und mit der metallischen oder dielektrischen Spiegelschicht versehen wird, dass dieses Verbundteil einen weiteren Anschliff erhält, dass dann die Halbleiter-Diode und dieses Verbundteil zueinander justiert und fest verbunden werden.

Vorteilhafterweise wird die erfindungsgemässe Ein- und Auskoppelvorrichtung schliesslich in einem Diodengehäuse montiert, wobei dann nur noch die zwei plus zwei Diodenkontakte sowie das Faserpigtail zugänglich sind.

Da die Emissionsfläche der Halbleiter-Diode nur wenige Quadratmikrometer beträgt, kann bei der gewählten Stosskopplung die Strahlung der Halbleiter-Diode mit hohem Wirkungsgrad eingekoppelt werden. Wegen $(A_a-A_e) \approx A_a$ ist aber auch der Auskoppelwirkungsgrad für die aus dem optischen Wellenleiter auszukoppelnde Lichtleistung sehr hoch.

Ein Anwendungsbereich für den Erfindungsgegenstand und ein Ausführungsbeispiel der Erfindung sind in der Zeichnung dargestellt und werden im folgenden näher beschrieben.

Fig. 1 zeigt ein faseroptisches bidirektionales Sternnetz unter Verwendung eines Reflexmischers $M_R$.

Fig. 2 ist eine Skizze vom Aufbau einer erfindungsgemässen kombinierten Ein- und Auskoppelvorrichtung:

Fig. 2a zeigt einen zentralen vertikalen Längsschnitt durch eine erfindungsgemässe Ein- und Auskoppelvorrichtung.

Fig. 2b zeigt eine Ansicht der beiden erfindungsgemässen Endflächen des optischen Wellenleiters und ihrer Umgebung, wie es von einem Beobachter gesehen werden könnte, der anstelle der Halbleiter-Diode in Richtung der Wellenleiterachse auf das Verbundteil schauen würde, das aus dem optischen Wellenleiter, dem Substrat und dem Plättchen besteht.

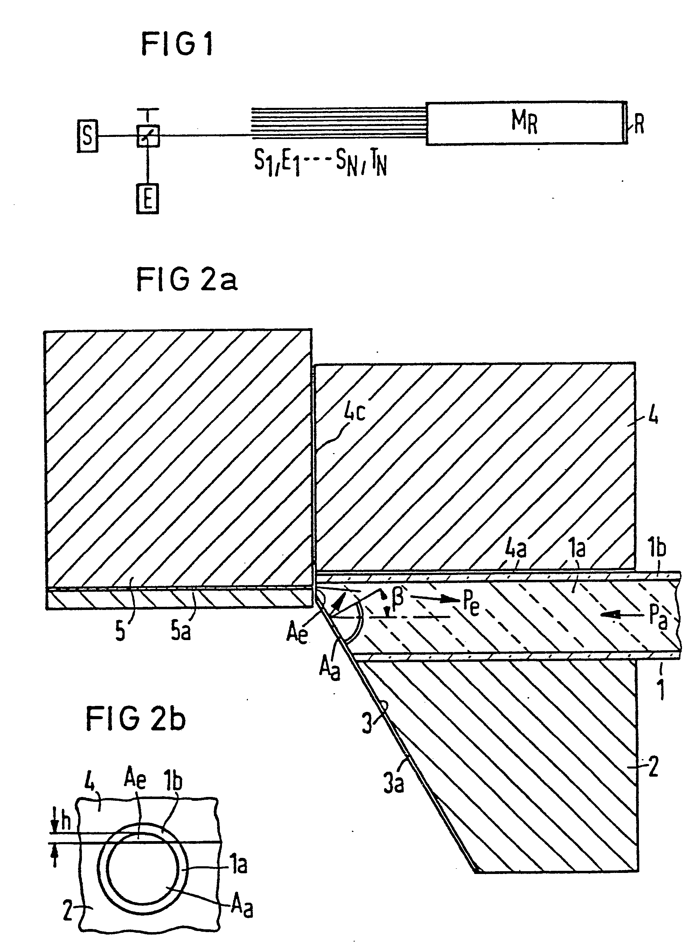

Fig. 1 zeigt ein Sternnetz für N-Teilnehmer unter Verwendung eines Reflexmischers $M_R$, dessen eine Endfläche eine Verspiegelung R aufweist, und zusätzlich eines Abzweigs T je Teilnehmer. Bei diesem Sternnetz werden für N-Teilnehmer nur N optische Wellenleiter benötigt. Mit S sind die Sender und mit E die Empfänger der N-Teilnehmer bezeichnet. Um die Systemverluste eines solchen Sternnetzes möglichst gering zu halten, müssen Signalleistungen bei den einzelnen Teilnehmerstationen möglichst verlustlos ein- und ausgekoppelt werden können. Bei den für ein Sternnetz nach Fig. 1 erforderlichen Ein- und Auskoppelvorrichtungen werden keine durchgehenden optischen Wellenleiter benötigt.

Fig. 2 ist eine Skizze vom Aufbau einer erfindungsgemässen kombinierten Ein- und Auskoppelvorrichtung. Fig. 2a zeigt einen vertikalen Längsschnitt einer erfindungsgemässen Ein- und Auskoppelvorrichtung. Eine Dickkernfaser 1 mit Stufenindexprofil, bei der der Kern 1a einen höheren Brechungsindex als der Mantel 1b aufweist, ist zwischen dem Substrat 2 und dem Plättchen 4 eingekittet. Durch Reflexion an der mit einer metallischen oder dielektrischen Spiegelschicht 3a versehenen Endfläche $A_a$, deren Normale mit der Wellenleiterachse des optischen Wellenleiters 1 einen Winkel β einschliesst, kann aus dem optischen Wellenleiter 1 eine Lichtleistung $P_a$ auf eine Detektorfläche 4a ausgekoppelt werden. Dabei muss der Winkel β so bemessen sein, dass die an der Endfläche $A_a$ reflektierte Strahlung nicht in den optischen Wellenleiter 1 zurückreflektiert wird, sondern dessen Mantel 1b durchdringen und auf die Detektorfläche 4a ausgekoppelt werden kann. Deswegen muss der Winkel β folgender Bedingung genügen:

$$\arcsin(A_n/n_o) < \beta \leq 45°,$$

wobei $A_n$ die numerische Apertur und $n_o$ der Kernbrechungsindex des optischen Wellenleiters 1 sind. Die numerische Apertur einer Dickkernfaser 1 sei 0,4 und ihr Kernbrechungsindex betrage 1,6. Damit erhält man einen minimalen Wert für den Winkel β von $\beta_{min} \approx 14,5°$.

Die Spiegelschicht 3a sollte grösstmögliches Reflexionsvermögen aufweisen. Bei dielektrischer Verspiegelung kann ein Reflexionsvermögen von nahezu 100% erreich werden. Es kann auch eine Metallverspiegelung verwendet werden. Als Spiegelschicht hohen Reflexionsvermögens eignet sich vorteilhaft ein Vielfach-Schichtensystem, wie es in «Siemens Forschungs- und Entwicklungsberichte» 8 (1979), Seite 136–140, beschrieben ist. Dort sind auch Dimensionierungsvorschriften für ein solches Vielfach-Schichtensystem angegeben. Für ein gefordertes Reflexionsvermögen von 90% und für unpolarisierte Strahlung sind beispielsweise etwa fünfzehn Schichten aufzubringen.

Über die Endfläche $A_e$, deren Normale parallel zur Wellenleiterachse ist, kann Lichtleistung $P_e$ aus der aktiven Zone 5a einer Laser-Diode 5 in den optischen Wellenleiter 1 eingekoppelt werden.

Fig. 2b zeigt die beiden Endflächen $A_a$, $A_e$, wie sie ein Beobachter sehen könnte, der anstelle der Laser-Diode 5 in Richtung der Faserachse auf das Verbundteil 6, das aus dem Substrat 2, dem optischen Wellenleiter 1 und dem Plättchen 4 besteht, schaut, wobei sich das Substrat 2 vom Beobachter aus gesehen unten und das Plättchen 4 oben befinden würde.

Zweckmässig ist es, Dickkernfasern mit mindestens 200 µm Kerndurchmesser zu verwenden, weil sich dann die erfindungsgemässe Vorrichtung technologisch problemlos herstellen lässt. In Fig. 2b ist eine Höhe h der Endfläche $A_e$ definiert. Bei einer Dickkernfaser mit 200 µm Kerndurchmesser kann z.B. diese Höhe h = 30 µm gewählt werden.

Die kleine Emissionsfläche der Laser-Diode 5, typisch z.B. 0,2 µm mal 0,4 µm, und der Öffnungswinkel der Abstrahlung, der quer zur Längsrichtung der Emissionsfläche gemessen in Luft etwa 30° bis 60° und parallel zur Längsrichtung gemessen in Luft etwa 20° bis 40° beträgt, machen die Laser-Diode 5 als Strahlungsquelle besonders geeignet.

Die Lichtleistung $P_e$ der Laser-Diode 5 wird durch die Endfläche $A_e$ in den Faserkern 1a eingestrahlt. 5a ist die aktive Zone der Laser-Diode 5. Da die Emissionsfläche der Laser-Diode nur wenige Quadratmikrometer beträgt, kann bei der gewählten Stosskopplung der Laserstrahlung mit hohem Wirkungsgrad eingekoppelt werden.

Das Plättchen 4 ist eine Fotodiode mit der Detektorfläche 4a oder ein anderes Superstrat, welches die Fotodiode enthält.

Wegen $(A_a - A_e) \approx A_a$ ist auch der Auskoppelwirkungsgrad für die Lichtleistung $P_a$ sehr hoch. Die Laser-Diode 5 und das Verbundteil 61, das aus dem optischen Wellenleiter 1, dem Substrat 2 und dem Plättchen 4 besteht, sind zueinander justiert und fest miteinander verbunden.

Eine erfindungsgemässe Vorrichtung wird zweckmässigerweise so hergestellt, dass entweder im Substrat 2 oder im Plättchen 4 eine Führungsnut für die Dickkernfaser 1 z.B. durch anisotropes Ätzen erzeugt wird. Die Dickkernfaser 1 wird sodann in der so hergestellten Führungsnut zwischen dem Substrat 2 und dem Plättchen 4 mit optisch verlustarmem Kleber eingekittet. Nach dem Aushärten dieses Klebers wird an dem Verbundteil 6, das aus dem optischen Wellenleiter 1, dem Substrat 2 und dem Plättchen 4 besteht, ein Schrägschliff 3 hergestellt, wobei der Winkel β gemäss Anspruch 1 zu wählen ist. Der Schrägschliff 3 wird optisch poliert und mit einer Spiegelschicht 3a versehen, so dass das Licht mit der Leistung $P_a$ aus der Dickkernfaser 1 heraus auf die Detektorfläche 4a reflektiert wird. Die Spiegelschicht 3a wird als metallene Einzelschicht oder als dielektrische Vielfachschicht aufgedampft. Der verspiegelte Rohling erhält nun einen weiteren Anschliff 4c, dessen Normale die Faserachse ist. Dieser Anschliff entfernt einen kleinen Bereich der Spiegelfläche 3a im oberen Kernbereich, wodurch im oberen Kernbereich die Endfläche $A_e$ gebildet wird. Besonders vorteilhaft ist es, wenn mehrere Ein-Auskoppelelemente ähnlich der in den deutschen Patentanmeldungen 29 20 957 und 30 12 184 beschriebenen Technologie en bloc hergestellt und anschliessend in Einzelemente getrennt werden.

Die Laser-Diode 5 und das Verbundteil 6, das aus dem optischen Wellenleiter 1, dem Substrat 2 und dem Plättchen 4 besteht, werden dann zueinänder justiert und fachmännisch fest miteinander verbunden. Nach der Montage in einem Diodengehäuse sind nur noch die zwei plus zwei Diodenkontakte sowie das Faserpigtail zugänglich.

Es wird noch einmal betont, dass die beiden Endflächen $A_a$ und $A_e$ am Ende des optischen Wellenleiters 1, über die Lichtleistung $P_a$ aus dem Wellenleiterkern 1a ausgekoppelt bzw. Lichtleistung $P_e$ in den Wellenleiterkern 2a eingekoppelt wird, sich nur im Bereich des Wellenleiterkerns 1a erstrecken.

**Patentansprüche**

1. Ein- und Auskoppelvorrichtung zum Ein- und Auskoppeln von Lichtleistung in/aus einem optischen Wellenleiter, der aus Wellenleiterkern und -mantel besteht, dadurch gekennzeichnet, dass ein zwei Teilflächen $A_a$, $A_e$ aufweisendes Ende des optischen Wellenleiters (1) an einem Plättchen (4) und an einer Halbleiter-Sendediode (5) angeordnet ist, wobei über die Endfläche $A_e$, deren Normale parallel zur Wellenleiterachse ist, Lichtleistung $P_e$ aus der aktiven Zone (5a) der Halbleiter-Sendediode (5) in den optischen Wellenleiter (1) einkoppelbar ist, und wobei durch Reflexion an der mit einer metallischen oder dielektrischen Spiegelschicht (3a) versehenen Endfläche $A_a$, deren Normale mit der Wellenleiterachse einen Winkel $\beta$ einschliesst, Lichtleistung $P_a$ aus dem optischen Wellenleiter (1) durch dessen Mantel hindurch auf eine Detektorfläche (4a) auskoppelbar ist, wobei der Winkel $\beta$ so bemessen ist, dass arcsin $(A_n/n_o) < \beta \leq 45°$ erfüllt ist, wobei $A_n$ die numerische Apertur und $n_o$ der Kernbrechungsindex des optischen Wellenleiters (1) sind.

2. Ein- und Auskoppelvorrichtung nach Anspruch 1, dadurch gekennzeichnet, dass der optische Wellenleiter (1) eine Dickkernfaser ist.

3. Ein- und Auskoppelvorrichtung nach Anspruch 1 oder 2, dadurch gekennzeichnet, dass der optische Wellenleiter (1) zwischen einem Substrat (2) und dem Plättchen (4) angeordnet ist.

4. Ein- und Auskoppelvorrichtung nach einem der Ansprüche 1 bis 3, dadurch gekennzeichnet, dass das Plättchen (4) eine Fotodiode mit der Detektorfläche (4a) oder ein Superstrat ist, welches eine Fotodiode mit der Detektorfläche (4a) enthält.

5. Ein- und Auskoppelvorrichtung nach einem der Ansprüche 1 bis 4, dadurch gekennzeichnet, dass die Endfläche $A_e$ etwa um den Faktor 10 kleiner ist als die Endfläche $A_a$.

6. Verfahren zur Herstellung einer Ein- und Auskoppelvorrichtung nach einem der Ansprüche 1 bis 5, dadurch gekennzeichnet, dass eine Führungsnut für den optischen Wellenleiter (1) entweder im Substrat (2) oder im Plättchen (4) angebracht wird, dass dann der optische Wellenleiter (1) zwischen dem Substrat (2) und dem Plättchen (4) eingekittet wird, dass dann ein Schrägschliff (3) an dem Verbundteil (6), das aus dem optischen Wellenleiter (1), dem Substrat (2) und dem Plättchen (4) besteht, angebracht wird, dass anschliessend dieser Schrägschliff (3) optisch poliert und mit der metallischen oder dielektrischen Spiegelschicht (3a) versehen wird, dass das Verbundteil (6) einen weiteren Anschliff (4c) erhält, dass dann die Halbleiter-Sendediode (5) und das Verbundteil (6) zueinander justiert und fest verbunden werden.

7. Verfahren zur Herstellung einer Ein- und Auskoppelvorrichtung nach Anspruch 6, dadurch gekennzeichnet, dass Verbundteile, jeweils bestehend aus optischem Wellenleiter (1), Substrat (2), Schrägschliff (3) und Plättchen (4), en bloc hergestellt und anschliessend erst vor der Montage mit den jeweiligen Halbleiter-Sendedioden zu Einzelelementen zertrennt werden.

8. Verfahren zur Herstellung einer Ein- und Auskoppelvorrichtung nach Anspruch 6 oder 7, dadurch gekennzeichnet, dass die Ein- und Auskoppelvorrichtung in einem Diodengehäuse montiert wird, wobei nur noch die zwei plus zwei Diodenkontakte sowie das Faserpigtail zugänglich sind.

**Revendications**

1. Dispositif d'entrée et de sortie pour injecter ou prélever un flux lumineux dans/d'un guide d'ondes optique qui est constitué par un noyau et une gaine de guide d'ondes, caractérisé par le fait qu'une extrémité du guide d'ondes optique (1), qui comporte deux surface partielles $A_a$, $A_e$, est disposée sur une plaquette (4) et sur une diode émettrice à semiconducteurs (5), un flux lumineux $P_e$ provenant de la zone active (5a) de la diode émettrice à semiconducteurs (5) pouvant être injecté dans le guide d'ondes optique (1) par l'intermédiaire de la surface extrême $A_e$ dont la normale est parallèle à l'axe du guide d'ondes, et un flux lumineux $P_a$ provenant du guide d'ondes optique (1) pouvant être prélevé, à travers sa gaine, sur une surface détectrice (4a), par réflexion sur la surface extrême $A_a$, munie d'une couche réfléchissante (3a) métallique ou diélectrique, dont la normale forme un angle $\beta$ avec l'axe du guide d'ondes, l'angle $\beta$ étant dimensionné de manière à satisfaire la relation arcsin $(A_n/n_o) < \beta \leq 45°$, $A_n$ étant l'ouverture numérique et $n_o$ l'indice de réfraction du noyau du guide d'ondes optique (1).

2. Dispositif d'entrée et de sortie suivant la revendication 1, caractérisé par le fait que le guide d'ondes optique (1) est une fibre à noyau épais.

3. Dispositif d'entrée et de sortie suivant la revendication 1 ou 2, caractérisé par le fait que le guide d'ondes optique (1) est disposé entre un substrat (2) et la plaquette (4).

4. Dispositif d'entrée et de sortie suivant l'une des revendications 1 à 3, caractérisé par le fait que la plaquette (4) est une photodiode avec la surface détectrice (4a) ou un superstrat qui contient une photodiode avec la surface détectrice (4a).

5. Dispositif d'entrée et de sortie suivant l'une des revendications 1 à 4, caractérisé par le fait que la surface extrême $A_e$ est plus petite d'un facteur d'environ 10 que la surface extrême $A_a$.

6. Procédé pour fabriquer un dispositif d'entrée et de sortie suivant l'une des revendications 1 à 5, caractérisé par le fait qu'une rainure de guidage pour le guide d'ondes optique (1) est ménagée dans le substrat (2) ou dans la plaquette (4), qu'ensuite le guide d'ondes optique (1) est mastiqué entre le substrat (2) et la plaquette (4), qu'ensuite une coupe oblique (3) est ménagée sur la pièce composite (6) qui est constituée par le guide d'ondes optique (1), le substrat (2) et la plaquette (4), qu'ensuite cette coupe oblique (3) est polie optiquement et est munie de la couche réfléchissante métallique ou diélectrique (3a), que la pièce composite (6) est munie d'une autre coupe (4c), et qu'ensuite la diode émettrice à semiconducteurs (5) et la pièce composite (6) sont ajustées l'une par rapport à l'autre et réunies rigidement.

7. Procédé pour fabriquer un dispositif d'entrée et de sortie suivant la revendication 6, caractérisé par le fait que des pièces composites, respectivement constituées par un guide d'ondes optique (1), un substrat (2), une coupe oblique (3) et une plaquette (4), sont fabriquées en bloc et ne sont séparées en éléments individuels qu'avant le montage avec les diodes émettrices à semiconducteurs respectives.

8. Procédé pour fabriquer un dispositif d'entrée et de sortie suivant la revendication 6 ou 7, caractérisé par le fait que le dispositif d'entrée et de sortie est monté dans un boîtier de diodes, seulement les deux plus deux contacts des deux diodes ainsi que la queue de la fibre ètant encore accessibles.

## Claims

1. An input/out put coupling arrangement for the input- and output- coupling of light power into and out of an optical waveguide consisting of a waveguide core and a waveguide casing, characterised in that one end of the optical waveguide (1) which has two part surfaces $A_a$, $A_e$ is arranged at a platelet (4) and a semiconductor transmitter diode (5), in which through the end surface $A_e$ the normal to which is parallel to the waveguide axis, light power $P_e$ can be input-coupled into the optical waveguide (1) from the active zone (5a) of the semiconductor transmitter diode (5), and in which, as a result of reflection against the end surface $A_a$ which is provided with a metallic or dielectric reflective coating (3a) and whose normal includes an angle $\beta$ with the waveguide axis, light power $P_a$ can be output-coupled from the optical waveguide (1) through the casing thereof onto a detector surface (4a), and in which the angle $\beta$ has a value such that the expression arcsin $(A_n/n_o) < \beta \leq 45°$ ist fulfilled where $A_n$ represents the numerical aperture and $n_o$ represents the refractive index of the core of the optical waveguide (1).

2. An input/output coupling arrangement according to Claim 1, characterised in that the optical waveguide (1) is a thick-core fibre.

3. An input/output coupling arrangement according to Claim 1 or Claim 2, characterised in that the optical waveguide (1) is arranged between a substrate (2) and the platelet (4).

4. An input/output coupling arrangement according to one of Claims 1 to 3, characterised in that the plate (4) consists of a photo-diode provided with the detector surface (4a), or is a superstrate which contains a photo-diode provided with the detector surface (4a).

5. An input/output coupling arrangement according to one of Claims 1 to 4, characterised in that the end surface $A_e$ is smaller than the end surface $A_a$ by approximately a factor of 10.

6. A process for the production of an input/output coupling arrangement according to one of Claims 1 to 5, characterised in that a guide groove for the optical waveguide (1) is arranged, either in the substrate (2), or in the platelet (4); that the optical waveguide (1) is then cemented between the substrate (2) and the platelet (4); that an obliquely ground surface (3) is then formed on the combined component (6) consisting of the optical waveguide (1), the substrate (2) and the platelet (4); that this obliquely ground surface (3) is then optically polished and provided with the metallic or dielectric reflective coating (3a); that the combined component (6) is provided with a further ground surface (4c); and that then the semiconductor transmitter diode (5) and the combined component (6) are adjusted relative to one another and permanently connected.

7. A process for the production of an input/output coupling arrangement as claimed in Claims 6, characterised in that combined components, each consisting of an optical waveguide (1), substrate (2), obliquely ground surface (3) and platelet (4) are produced as a block and are not divided into individual elements only prior to the assembly with the resprective semiconductor transmitter diodes in question.

8. A process for the production of an input/output coupling arrangement according to Claim 6 or Claim 7, characterised in that the input/output coupling arrangement is assembled in a diode housing, so that only the two plus two diode contacts and the fibre pigtail are accessible.

FIG 1

$S$

$T$

$E$

$S_1, E_1 \cdots S_N, T_N$

$M_R$

$R$

FIG 2a

4c

4

4a  1a  1b

β  $P_e$

$P_a$

$A_e$

5  5a

$A_a$

3

3a

1

2

FIG 2b

4  Ae  1b

h

1a

2  Aa